# EUROPÄISCHE PATENTSCHRIFT

(11) **EP 3 068 708 B1**
(45) Veröffentlichungstag und Bekanntmachung des Hinweises auf die Patenterteilung: **08.05.2019**
(21) Anmeldenummer: 14781900.7
(22) Anmeldetag: 10.10.2014
(51) Int. Cl.: B65D 81/18, B65D 81/24

(54) **ANORDNUNG EINES DECKELS MIT EINEM KORROSIONSSCHUTZMITTELBEHÄLTER**
ARRANGEMENT OF A COVER WITH AN ANTICORROSION AGENT CONTAINER
AGENCEMENT D'UN COUVERCLE AVEC UN RECIPIENT POUR MOYEN DE PROTECTION CONTRE CORROSION

(30) Priorität: 11.11.2013 DE 102013222845
(43) Veröffentlichungstag der Anmeldung: 21.09.2016
(73) Patentinhaber: ZF Friedrichshafen AG, 88046 Friedrichshafen (DE); ZF Wind Power Antwerpen NV, 3920 Lommel (BE)
(72) Erfinder: HUYBERECHTS, Jean-Pierre, B-2980 Zoersel (BE)
(86) Internationale Anmeldenummer: PCT/EP2014/071709
(87) Internationale Veröffentlichungsnummer: WO 2015/067428

(56) Entgegenhaltungen:
- EP-A1- 2 628 978
- WO-A1-02/27069
- WO-A1-2012/000539
- US-A- 5 676 739
- US-A1- 2003 019 872

## Beschreibung

Die vorliegende Erfindung befasst sich mit einer Anordnung mit einem Deckel für ein Getriebe und einem Korrosionsschutzmittelbehälter sowie einem Getriebe mit einer solchen Anordnung.

Die Verhinderung von Korrosion ist eine zentrale Aufgabe beim Transport, Betätigen, Lagern und auch Herstellen von korrodierbaren Bauteilen, wie Maschinen, Getrieben etc.

Unter dem Begriff "Korrosion" wird im Weiteren insbesondere das Rosten von Eisen und Stahl an Maschinenteilen verstanden. Auch kann jedoch unter dem Begriff Korrosion auch die ungewünschte Veränderung von anderen Metallen, wie Aluminium und/oder Kupfer, insbesondere durch Oxidation und/oder Umwelteinflüsse verstanden werden. Auch kann unter dem Begriff Korrosion die Verhinderung von Kunststoffen oder anderen Werkstoffen durch Umwelteinflüsse, wie zum Beispiel Hitze oder Feuchtigkeit verstanden werden.

Im Stand der Technik werden zur Verhinderung von Korrosion korrosionsbeständige Materialien, wie Stahl, Aluminium etc, verwendet. Dies ist jedoch aus Kostengründen und aufgrund der besonderen Materialeigenschaften dieser Materialien nicht immer möglich.

Auch können die Vorrichtungen oder Bauteile, die vor einer Korrosion geschützt werden sollen, mit einer Oberflächenbeschichtung, wie zum Beispiel einem Lack, versehen werden. Aber sowohl die Materialkosten der Beschichtung als auch die Kosten für das Aufbringen der Beschichtung führen zu einer Erhöhung der Herstellungskosten für die Vorrichtungen oder Bauteile. Auch werden durch Oberflächenbeschichtungen die Oberflächeneigenschaften der Vorrichtung oder des Bauteils verändert, so dass eventuell unerwünschte Oberflächeneigenschaften durch die Beschichtung entstehen.

Eine weitere Möglichkeit zur Verhinderung von Korrosion ist es, das Bauteil oder die Vorrichtung in einer Schutzatmosphäre, wie zum Beispiel unter Stickstoff zu lagern.

Um eine solche Schutzatmosphäre aufrechterhalten zu können, muss die Vorrichtung und/oder das Bauteil in einem gasdichten Behälter transportiert werden und/oder eine ständige Schutzatmosphärenzufuhr zu der zu schützenden Vorrichtung und/oder Bauteil gewährleistet sein.

Eine weitere Möglichkeit ergibt sich aus Festkörpern, welche ein Gas erzeugen, wobei dieses Gas die Korrosion von Bauteilen verhindert. Solche Festkörper sind auch als VCI bekannt.

Die WO2012/000539 A1 offenbart eine Anordnung mit einem Deckel für ein Getriebe eines Industrieroboters und einem Korrosionsschutzmittelbehälter, wobei der Deckel einen feuchtigkeitsabsorbierenden Körper aus einem von einer porösen Membran umgebenen Absorbermaterial besitzt. Der Deckel ist in eine Öffnung einer Getriebewand eingesetzt, so dass der feuchtigkeitsabsorbierende Körper in den Innenraum des Getriebes hineinragt.

WO02/27069 A1 offenbart ein Korrosionsschutzsystem, bei dem ein vor Korrosion zu schützender Gegenstand zusammen mit einer ersten Kapsel und einer zweiten Kapsel jeweils mit einer porösen Wand in einer Umhüllung platziert ist, wobei in der ersten Kapsel ein Feuchtigkeitsabsorber und in der zweiten Kapsel ein VCI angeordnet sind.

Aufgabe der vorliegenden Erfindung ist es, eine Vorrichtung bereitzustellen, die einen einfacheren, zuverlässigeren und/oder kostengünstigeren Korrosionsschutz erlaubt.

Gelöst wird diese Aufgabe durch eine Anordnung nach Anspruch 1 sowie durch ein Getriebe nach Anspruch 3.

Bevorzugte Ausführungsformen befinden sich in den Unteransprüchen.

Insbesondere kann die Aufgabe gelöst werden durch eine Anordnung mit einem Deckel für ein Getriebe und einem Korrosionsschutzmittelbehälter, wobei der Deckel mit dem Korrosionsschutzmittelbehälter verbunden ist, wobei der Korrosionsschutzmittelbehälter in einem Innenraum des Getriebes anordenbar ist, wobei der Korrosionsschutzmittelbehälter zumindest eine erste und eine zweite Kammer und zumindest eine erste und eine zweite perforierte Wand aufweist, wobei die erste Wand die erste Kammer von dem Innenraum trennt, wobei die zweite Wand die zweite Kammer von dem Innenraum trennt, wobei in der zweiten Kammer ein Mittel angeordnet ist, welches Feuchtigkeit absorbiert, und wobei in der ersten Kammer ein Mittel angeordnet ist, das Gase zum Korrosionsschutz abgibt.

Unter einer perforierten Wand wird eine Wand verstanden, welche einen Gasaustausch zulässt. Eine solche Wand kann zum Beispiel eine oder mehrere Öffnungen aufweisen. Auch kann eine solche Wand aus einem gas-durchlässigen Material bestehen.

Insbesondere kann unter einer perforierten Wand eine Wand verstanden, welche mehrere Öffnungen aufweist, durch die ein Gas hindurchtreten kann.

Insbesondere kann die Wand mehr als fünf Öffnungen, besonders bevorzugt mehr als zehn Öffnungen aufweisen.

Insbesondere kann die Gesamtfläche aller Öffnungen zusammen einen Anteil von 25- 75% der Gesamtfläche der Wand ausmachen, bevorzugt 40%- 60%, besonders bevorzugt ungefähr 50% ausmachen.

Insbesondere können die Öffnungen einen Durchmesser von weniger als 5mm, bevorzugt kleiner als 3 mm, besonders bevorzugt kleiner als 1 mm aufweisen.

Unter einer perforierten Wand kann auch eine Wand verstanden werden, welche ein Gas durchlässt, aber einen Festkörper zurückhält.

Das Korrosionsschutzmittel kann bei der Anwendung in einem Behälter beherbergt werden. So wird es möglich das Korrosionsschutzmittel zum Beispiel zusammen mit dem Behälter nach der Anwendung leicht aus dem oder von dem Bauteil zu entfernen.

Auch kann ein Korrosionsschutzmittelbehälter bereitgestellt werden, welcher zumindest zwei Kammern aufweist und es so ermöglicht, zwei verschiedene Korrosionsschutzmittel zur Verhinderung von Korrosion zu verwenden. Insbesondere können die Innenräume der Kammern voneinander getrennt sein.

Insbesondere kann durch eine perforierte Wand verhindert werden, dass das Korrosionsschutzmittel als Festkörper in das Bauteil gelangt und so die Funktion des Bauteils gefährdet oder verhindert.

Insbesondere können zwei oder mehrere Kammern eine perforierte Wand aufweisen. So weist der Korrosionsschutzmittelbehälter zwei oder mehrere Kammern auf, welche durch eine perforierte Wand von der Umgebung abgetrennt sind. Somit wird es möglich, in einem Korrosionsschutzmittelbehälter mehrere Korrosionsschutzmittel anzuordnen, ohne dass die Korrosionsschutzmittel direkten Kontakt zueinander haben.

Die Wände können so angeordnet sein, dass sie weder benachbart zueinander noch einander zugewandt sind. So können die Wände voneinander abgewandt angeordnet sein. Besonders bevorzugt weisen die Wände einen Abstand von mehr als 2 cm voneinander auf.

So können in den verschiedenen Kammern verschiedene Mittel angeordnet sein, bei denen verhindert werden soll, dass sich die Mittel gegenseitig beeinflussen. Durch die Anordnung der Wände entgegengesetzt voneinander, wird die gegenseitige Beeinflussung der verschiedenen Mittel verringert. So kann auch verhindert werden, dass der gasförmige Anteil des einen Mittels durch die feste oder flüssige Phase des anderen Mittels absorbiert wird und in der entsprechenden Kammer gebunden wird.

So wird es möglich, ein Mittel in der ersten Kammer zu platzieren, welches ein korrosionshemmendes Gas entlässt, während in der anderen Kammer ein Mittel angeordnet ist, welches Stoffe, wie Feuchtigkeit oder Flüssigkeiten, absorbiert.

In dem Korrosionsschutzmittelbehälter ist zumindest in einer Kammer ein Mittel angeordnet, das Dämpfe zum Korrosionsschutz abgibt. Ein solches Mittel kann ein volatiler Korrosionshemmer (Volatile Corrosion Inhibitor (VCI)) sein. Dies können z.B. Salze, wie Amide oder Nitride sein. Inhibitoren oder Hemmer werden dabei Substanzen genannt, zum Hemmen oder Unterbinden von chemischen Reaktionen. Somit stellen volatile Korrosionshemmer flüchtige Substanzen da, welche die chemischen Reaktionen hemmen, die zu einer Korrosion führen.

Dabei gehen volatile Korrosionshemmer bei der Anwendung von zum Beispiel einem festen Zustand kontinuierlich in einen gasförmigen Zustand über und legen sich fest oder flüssig an dem zu schützenden Bauteil als Film ab. Dabei verdrängt der Film die Flüssigkeit, welche sich auf dem Bauteil angelagert hat und eine Korrosion bewirken könnte.

Unter Dämpfen werden in der Beschreibung und auch in den Ansprüchen Gase und Gasgemische verstanden. So kann ein Festkörper in dem Korrosionsschutzmittelbehälter angeordnet werden, welcher bei der Anwendung zusammen mit dem Korrosionsschutzmittelbehälter in der zu schützenden Vorrichtung und/oder Bauteil platziert werden kann.

In der zweiten Kammer ist Mittel angeordnet, welches Feuchtigkeit absorbiert. So kann einerseits die Feuchtigkeit aus dem Bauteil und/oder der Vorrichtung entfernt werden und so die Korrosion schon allein durch die besonders trockene Umgebung verhindert werden.

Der Korrosionsschutzmittelbehälter kann aus einem nichtrostenden Material, wie zum Beispiel nichtrostende Metalle und/oder Kunststoffe, sein. Dadurch wird verhindert, dass zum Beispiel an dem Korrosionsschutzmittelbehälter anhaftender Rost in das Bauteil und/oder die Vorrichtung eingebracht wird und so sich in dem oder an dem Bauteil festsetzt und das Bauteil und/oder die Vorrichtung zu rosten beginnt.

Auch können die Kammern abgerundete Ecken und/oder Kanten aufweisen. So können die Kammern innen abgerundete Ecken und Kanten aufweisen, damit beim Einbringen eines Korrosionsschutzmittels in den Korrosionsschutzmittelbehälter das Korrosionsschutzmittel nicht beschädigt wird. Insbesondere bei Korrosionsschutzmittel welche aus einem Festkörper bestehen, kann durch das Vermeiden spitzer Kanten und Ecken verhindert werden, dass Teile des Festkörpers vom Korrosionsschutzmittel abgetrennt werden und zum Beispiel durch die Öffnungen der perforierten Wand hindurchtreten und in das Bauteil und/oder die Vorrichtung gelangen können.

Auch wird bei Korrosionsschutzmitteln, welche zum Beispiel gasförmig oder flüssig sind und mit einer Hülle umgeben sind, verhindert, dass die Hülle durch spitze Ecken oder Kanten beschädigt wird und so Teile des Korrosionsschutzmittels aus der Hülle austreten.

Auch kann der Korrosionsschutzmittelbehälter außen runde Ecken und/oder Kanten aufweisen. So kann verhindert werden, dass bei einem Einbringen des Behälters in oder an eine Vorrichtung und/oder in oder an ein Bauteil diese Vorrichtung und/oder dieses Bauteil durch den Korrosionsschutzmittelbehälter beschädigt wird. Dies gilt insbesondere für Vorrichtungen, wie Dichtungen und andere Bauteile aus Kunststoff oder Gummi, aber auch für Metallbauteile, welche zum Beispiel eine besonders vergütete und/oder glatte Oberfläche aufweisen.

Auch kann durch runde Ecken und /oder Kanten an der Außenseite des Korrosionsschutzmittelbehälters verhindert werden, dass beim Einbringen des Korrosionsschutzmittelbehälters in und/oder an das Bauteil und/oder die Vorrichtung diese Ecken und/oder Kanten abgestoßen werden und so die abgestoßenen Teile in das Bauteil und/oder die Vorrichtung gelangen und damit zum Beispiel, wenn diese abgestoßenen Teile in ein Lager oder ein Getriebe geraten, dieses Lager oder Getriebe schädigen.

Nach der Erfindung kann der Korrosionsschutzmittelbehälter mit dem Deckel an dem Getriebe befestigt, bevorzugt jedoch in einem Gehäuse eines Getriebes befestigt werden. So kann das Korrosionsschutzmittel in dem Korrosionsschutzmittelbehälter wiederauffindbar und leicht entfernbar angeordnet werden. Insbesondere kann der Korrosionsschutzmittelbehälter für den Transport vor dem Transport in dem Getriebe platziert werden und vor der Inbetriebnahme aus dem Getriebe entfernt werden.

Es wurde also weiter erkannt, dass das Getriebe während des Transports und der Lagerung vor Korrosion geschützt werden muss. Dazu kann der Korrosionsschutzmittelbehälter vor der Lagerung und dem Transport in das Getriebe eingebracht werden und während der Lagerung und/oder des Transports in dem Getriebe verbleiben. Auch kann während der Lagerung oder des Transports das Korrosionsschutzmittel ausgetauscht werden, zum Beispiel um das Korrosionsschutzmittel zu erneuern oder das Korrosionsschutzmittel neuen Bedingungen, wie veränderten Umweltbedingungen, wie Temperatur und Feuchtigkeit, anzupassen.

Vor der Inbetriebnahme des Getriebes kann der Korrosionsschutzmittelbehälter aus dem Getriebe entfernt werden, um zu verhindern, dass der Betrieb des Getriebes durch den Korrosionsschutzmittelbehälter gestört wird.

Auch kann vor der Inbetriebnahme des Getriebes das Getriebe mit Öl gefüllt werden. Durch die Entfernung des Korrosionsschutzmittelbehälters kann auch das Korrosionsschutzmittel aus dem Getriebe entfernt werden und so verhindert werden, dass das Korrosionsschutzmittel und/oder der Korrosionsschutzmittelbehälter mit dem Öl reagieren und so das Öl ungewünschte Eigenschaften erhält oder sich störende Teile aus dem Korrosionsschutzmittelbehälter oder dem Korrosionsschutzmittel ablösen und dann zu Schäden in dem Getriebe führen.

Erfindungsgemäß ist der Deckel mit einem Korrosionsschutzmittelbehälter verbunden. Durch die Verbindung des Korrosionsschutzmittelbehälters mit dem Deckel kann der Korrosionsschutzmittelbehälter gut von außen erreichbar angeordnet werden. So kann der Korrosionsschutzmittelbehälter aus dem Getriebe entfernt werden, indem der Deckel vom Getriebe entfernt wird und der Korrosionsschutzmittelbehälter mit dem Deckel aus dem Getriebe bewegt wird.

Der Deckel kann dabei lösbar mit dem Getriebe, insbesondere dem Getriebegehäuse, verbunden sein.

Auch kann die Aufgabe durch ein Getriebe nach Anspruch 3 gelöst werden. Durch den Korrosionsschutzmittelbehälter kann ein Korrossionsschutzmittel, insbesondere ein feuchtigkeitsaufnehmendes und ein korrosionsschutzmittelabgebendes Mittel, an dem Getriebe platziert werden.

Erfindungsgemäß weist das Getriebe einen Innenraum auf und es ist ein Korrosionsschutzmittelbehälter in dem Innenraum angeordnet.

Bevorzugt weist das Getriebe zumindest einen Deckel auf, welcher den Innenraum verschließt.

Nicht unter die Erfindung fällt ein Verfahren zur Verhinderung von Korrosion in Getrieben, wobei in einen Innenraum des Getriebes ein Mittel, welches korrosionsverhindernde Dämpfe abgibt und ein Mittel, welches Feuchtigkeit aufnimmt, eingebracht wird und diese Mittel vor der Inbetriebnahme aus dem Innenraum entfernt wird.

In einer Ausführungsform können die korrosionsverhindernden Dämpfe in das Getriebe geblasen werden. Dazu kann der Korrosionsschutzmittelbehälter mit einem Gebläse versehen werden. Dabei kann das Gebläse, wie einen Lüfter, an der Außenseite und/oder in dem Innenraum des Korrosionschutzmittelbehälters angeordnet sein. Auch kann das Gebläse in dem Innenraum des Korrosionsschutzmittelbehälters angeordnet sein, der das Mittel enthält, welches ein vor Korrosion schützendes Gas abgibt.

Auch kann das Gebläse beabstandet vom Korrosionsschutzmittelbehälter angeordnet sein. So kann das vor Korrosion schützende Gas einfacher verteilt werden und insbesondere die Verteilung des Gases an entfernte Flächen oder kleine Öffnungen wird durch das Gebläse erleichtert.

Im Weiteren wird die Erfindung anhand von der Figuren weiter erläutert. Dabei zeigt
Figur 1 einen ersten Korrosionsschutzmittelbehälter in der Schnittansicht;
Figur 2 einen zweiten Korrosionsschutzmittelbehältern in der Schnittansicht;
Figur 3 den Korrosionsschutzmittelbehälter nach Figur 2 in der Draufsicht;
Figur 4 einen nicht unter die Erfindung fallenden Korrosionsschutzmittelbehälter mit zwei Teilbehältern in der Draufsicht;
Figur 5 einen weiteren nicht unter die Erfindung fallenden Korrosionsschutzmittelbehälter mit zwei Teilbehältern in der Draufsicht;
Figur 6 einen Korrosionsschutzmittelbehälter mit abgerundeten Ecken ;
Figur 7 einen Korrosionsschutzmittelbehälter mit einem runden Querschnitt;
Figur 8 einen weiteren Korrosionsschutzmittelbehälter mit einem runden Querschnitt;
Figur 9 ein Getriebe mit einem Deckel;
Figur 10 einen Deckel.

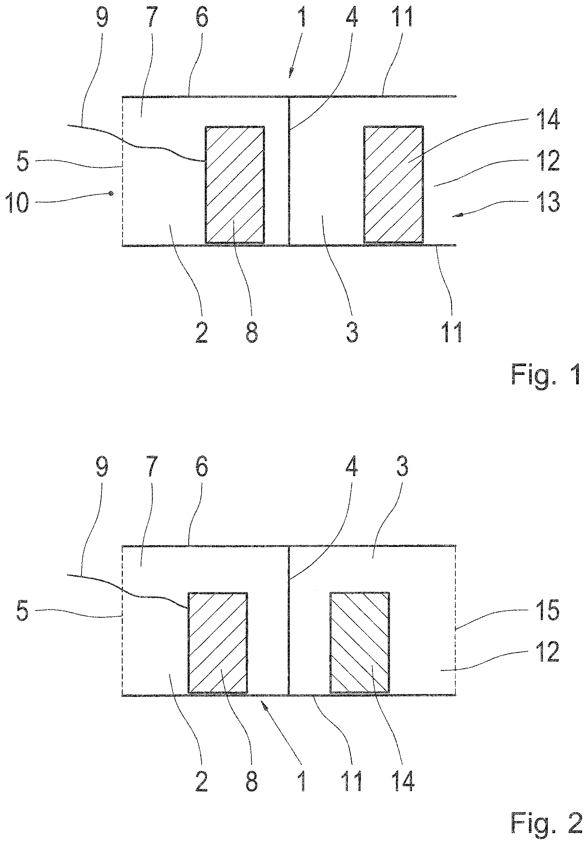

Figur 1 zeigt einen Korrosionsschutzmittelbehälter 1 mit einer ersten Kammer 2 und einer zweiten Kammer 3, wobei die erste Kammer 2 und die zweite Kammer 3 durch eine Zwischenwand 4 voneinander getrennt sind. Die erste Kammer 2 weist dabei eine perforierte Wand 5 auf, welche zusammen mit den Seitenwänden 6 und der Zwischenwand 4 den Innenraum 7 der ersten Kammer 2 umgibt.

In dem Zwischenraum 7 der ersten Kammer 2 ist ein Mittel 8, wie ein Festkörper, angeordnet, welches ein korrosionshemmendes Gas 9 abgibt. Das Gas 9 strömt dabei von dem Mittel 8 in den Innenraum 7 und dann durch die perforierte Wand 5 in die Umgebung 10.

Der Innenraum 12 der zweiten Kammer 3 wird durch die Seitenwände 11 und die Zwischenwand 4 teilweise begrenzt. Die zweite Kammer 3 ist dabei an der Stirnseite 13 offen. In der zweiten Kammer 3 ist dabei ein Mittel 14, wie ein Festkörper, angeordnet, welcher zum Beispiel die korrosionshemmende Wirkung des Gases 9 unterstützt. Dabei kann das Mittel 14 ebenfalls ein korrosionshemmendes Gas ausströmen und/oder eine korrossionsfördernde Substanz, wie eine Flüssigkeit oder Feuchtigkeit absorbieren. Auch kann das Mittel 14 zur Temperaturstabilisierungen, wie Kühlung, verwendet werden.

Die Seitenwände 6 und 11 und die Zwischenwand 4 können aus einem Kunststoff und/oder einem Metall, insbesondere einem Metall wie Aluminium, Kupfer und/ oder Stahl, bestehen. Auch ist es denkbar, dass die Seitenwände 6 und 11 und die Zwischenwand 4 aus unterschiedlichen Materialien und/oder einem Materialmix bestehen.

Insbesondere ist die perforierte Wand 5 von der Öffnung 13 abgewandt, so dass das Gas 9 nicht von dem Mittel 14 beeinflusst wird. Auch grenzt die perforierte Wand 5 nicht an die Zwischenwand 4, so dass die perforierte Wand 5 von der zweiten Kammer 3 möglichst weit entfernt ist.

Figur 2 zeigt eine zweite Ausführungsform eines Korrosionsschutzmittelbehälters 1. Der Korrosionsschutzmittelbehälter 1 weist dabei eine erste Kammer 2 und eine zweite Kammer 3 auf. Der Innenraum 7 der ersten Kammer 2 wird durch die Seitenwände 6, die perforierte Wand 5 und die Zwischenwand 4 begrenzt. In dem Innenraum 7 der ersten Kammer 2 ist ein Festkörper 8 angeordnet. Das Mittel 8 gibt ein Fluid, wie ein Gas 9, ab, welches durch die perforierte Wand 5 an das Bauteil gelangt, welches vor Korrosion geschützt werden soll.

Die zweite Kammer 3, weist einen Innenraum 12 auf, in dem sich ein Mittel 14 befindet. Der Innenraum 12 der zweiten Kammer 3 wird durch die perforierte Wand 15, die Seitenwände 11 und die Zwischenwand 4 umschlossen. Die perforierte Wand 15 ist dabei entgegengesetzt zur perforierten Wand 5 der ersten Kammer 2 angeordnet. Die perforierte Wand 5 wird dabei durch die Seitenwände 6 begrenzt, während die perforierte Wand 15 durch die Seitenwände 11 begrenzt wird.

Durch die Anordnung der perforierten Wand 5 von der perforierten Wand 15 wird erreicht, dass das Gas 9 des Mittels 8 nicht oder nur zu einem geringen Teil mit dem Mittel 14 interagiert. Das Mittel 14 kann dabei so ausgebildet sein, dass durch dieses Mittel 14 Flüssigkeit und/oder Feuchtigkeit, welche sich in der Umgebung befindet, gebunden wird.

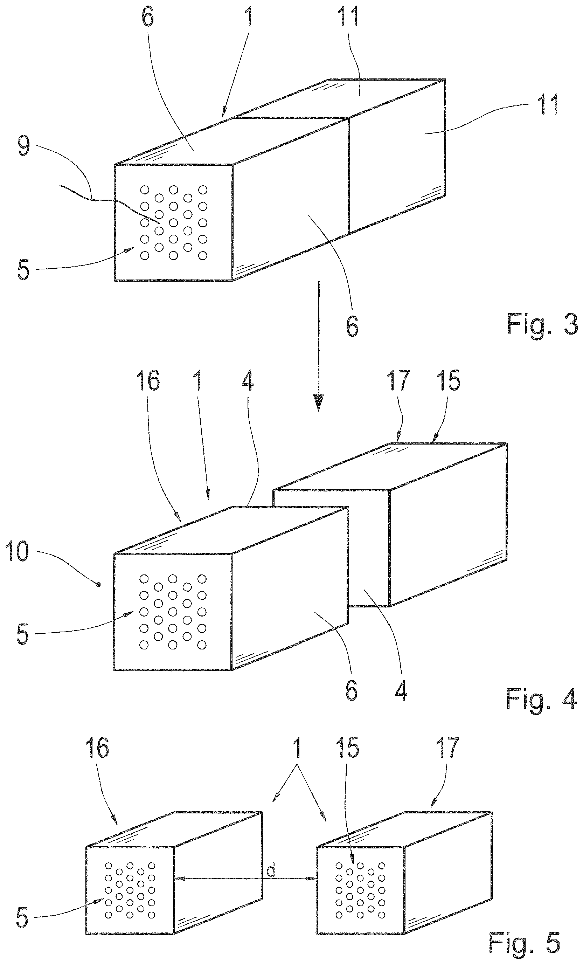

Figur 3 zeigt einen Korrosionsschutzmittelbehälter 1 in der Draufsicht. Dabei ist eine perforierte Wand 5 zu erkennen, durch welche ein vor Korrosion schützendes Gas 9 strömen kann. Seitlich wird der Korrosionsschutzmittelbehälter 1 durch die Seitenwände 6 und 11 begrenzt. Dabei können die Seitenwände 6 und 11 aus einem Stück sein.

Die Seitenwand und/oder die perforierte Wand können lösbar mit dem Korrosionsschutzmittelbehälter 1 verbunden sein oder eine verschließbare Öffnung aufweisen, so dass verschiedene Mittel 8, 14 in den Korrosionsschutzmittelbehälter 1 eingebracht werden können.
Auch können die Wände fest verschlossen sein, so dass die Mittel 8, 14 fest von dem Korrosionsschutzmittelbehälter 1 umgeben sind.

An den Seitenwänden 11 schließt die perforierte Wand 15 an, welche in der Figur 3 nicht zu sehen ist.
Die Seitenwände 11 sind dabei länger als die perforierte Wand 5, um einen großen Abstand zwischen der perforierten Wand 15 und der perforierten Wand 5 zu erhalten.

Figur 4 zeigt einen Korrosionsschutzmittelbehälter 1 umfassend einen ersten Teilbehälter 16 und einen zweiten Teilbehälter 17.

Der erste Teilbehälter 16 weist dabei eine perforierte Wand 5 auf, durch die ein vor Korrosion schützendes Gas strömen kann. Angrenzend an die perforierte Wand 5 sind Seitenwände 6 angeordnet, insbesondere senkrecht zur perforierten Wand 5. Entgegengesetzt zur perforierten Wand 5, angrenzend an die Seitenwände 6 ist eine Zwischenwand 4 angeordnet, so dass der Innenraum des Teilbehälters 16 durch die perforierte Wand 5, die Seitenwände 6 und die Zwischenwand 4 begrenzt wird.

Die perforierte Wand 5 kann dabei eine oder mehrere Öffnungen 18 aufweisen, durch welches ein Gas 9 strömen kann. Auch ist es möglich, dass die perforierte Wand 5 als permeable Membran ausgebildet ist, durch welche ebenfalls ein Gas treten kann.

In dem ersten Teilbehälter 16 kann ein Mittel 8, wie ein Festkörper oder eine Flüssigkeit, angeordnet sein. Das Mittel 8 kann dabei ein vor Korrosion schützendes Gas und/oder eine vor Korrosion schützende Flüssigkeit abgeben. Diese Gas 9 und/oder diese Flüssigkeit strömen dabei durch die perforierte Wand 5 in die Umgebung 10. Auch ist es möglich, dass das Mittel 8 der Umgebung 10 Bestandteile, wie Flüssigkeit und/oder Feuchtigkeit, entzieht und/oder die Umgebung außerhalb des Korrosionsschutzmittelbehälters in anderer Weise beeinflusst.

Benachbart und/oder beabstandet zu dem ersten Teilbehälter 16 ist ein zweiter Teilbehälter 17 angeordnet. Der zweite Teilbehälter 17 ist dabei identisch mit dem ersten Teilbehälter 16. Die beiden Teilbehälter 16 und 17 sind so plaziert, dass die jeweiligen perforierten Wände 5 und 15 voneinander abgewandt sind.

Dabei sind die jeweiligen Zwischenwände 4 einander zugewandt. Dabei ist es nicht notwendig, dass bei einer ausreichenden Länge der Teilbehälter 16 und 17, die Teilbehälter 16 und 17 voneinander beabstandet sind. Vielmehr kann über den Abstand der perforierten Wände 5 und 15 eine Beeinflussung des einen Mittels 8 durch das andere Mittel 18 ausgeschlossen oder verringert werden. Das Mittel 18 befindet sich dabei in der Figur 4 nicht sichtbar in dem Teilbehälter 17.

Figur 5 zeigt eine weitere Anordnung des Korrosionsschutzmittelbehälters 1, wobei der Korrosionsschutzmittelbehälter 1 einen Teilbehälter 16 und ein Teilbehälter 17 aufweist. Der Teilbehälter 16 ist beabstandet zum Teilbehälter 17 angeordnet. Dabei ist die perforierte Wand 5 in dieselbe Richtung gerichtet wie die perforierte Wand 15 des Teilbehälters 17. Da durch den Abstand zwischen den beiden Teilbehältern 16 und 17 eine Beeinflussung der Wirkungen der beiden Elemente 19 und 20, die sich in den jeweiligen Teilbehältern befinden, untereinander verringert werden kann, kann die Richtung der perforierten Wände 5 und 15 beliebig gewählt werden.

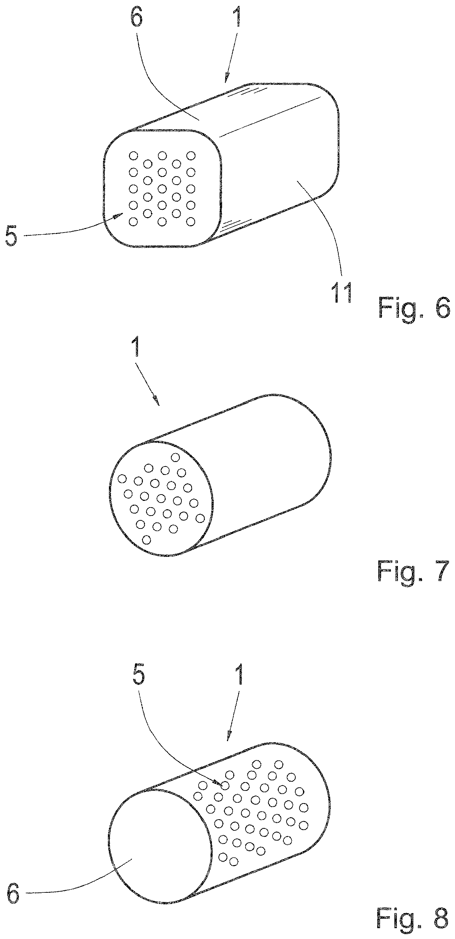

Figur 6 zeigt einen weiteren Korrosionsschutzmittelbehälter 1, wobei die Kanten der Seitenwände 6, 11 abgerundet sind. So kann verhindert werden, dass durch die Kanten Bauteile, welche vor Korrosion geschützt werden sollen beschädigt werden.

Auch kann die Kante zwischen der perforierten Wand 5 und den Seitenwänden 6 bzw. 11 abgerundet sein.

Weiter zeigt die Figur 7 einen Korrosionsschutzmittelbehälter 1 mit einem runden Querschnitt. Durch den runden Querschnitt werden Kanten ganz verhindert, so dass eine Beschädigung der zu schützenden Bauteile vermieden werden kann.

Figur 8 zeigt einen weiteren Korrosionsschutzmittelbehälter 1, wobei die perforierte Wand 5 an den Längsseiten des Korrosionsschutzmittelbehälter 1 angeordnet ist. Diese Stirnseite 21 des Korrosionsschutzmittelbehälters ist in dabei undurchlässig ausgebildet.

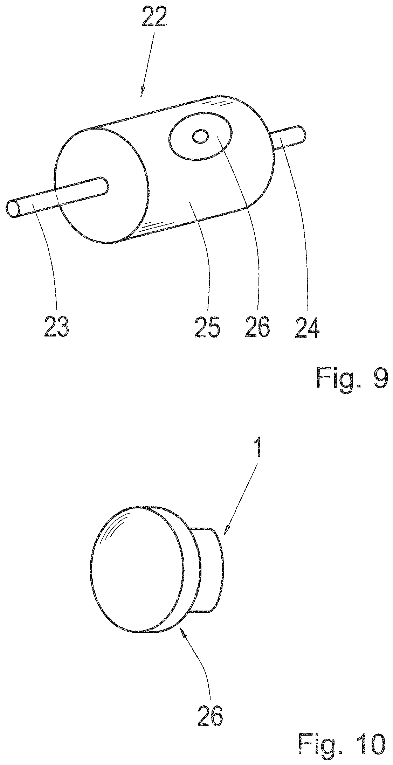

Figur 9 zeigt ein Getriebe 22 mit einer Antriebswelle 23 und einer Abtriebswelle 24. Zwischen der Antriebswelle 23 und der Abtriebswelle 24 befindet sich eine Übersetzung, welche die Drehbewegung der Antriebswelle 23 in eine Drehbewegung der Abtriebswelle 24 übersetzt, wobei die Drehbewegung der Abtriebswelle 24 eine von der Drehgeschwindigkeit der Antriebswelle 23 unterschiedliche Drehgeschwindigkeit aufweist.

Das Getriebe 22 weist weiter ein Gehäuse 25 auf, wobei sich in dem Gehäuse 25 ein Deckel 26 befindet, der lösbar mit dem Gehäuse 25 verbunden ist und wobei der Deckel 26 eine Öffnung zum Inneren des Gehäuses 25 abdeckt.

So kann durch Lösen des Deckels 26 die Öffnung zum Inneren des Gehäuses 25 freigegeben werden und so der Korrosionsschutzmittelbehälter 1 in das Innere des Gehäuses 26 eingebracht werden. Soll das Getriebe 22 in Betrieb genommen werden, so wird der Deckel 26 vom Gehäuse 25 gelöst und der Korrosionsschutzmittelbehälter 1 aus dem Inneren des Gehäuses 25 entfernt.

Figur 10 zeigt einen Deckel 26, an dem ein Korrosionsschutzmittelbehälter 1 angeordnet ist. Der Deckel 26 kann dabei mit dem Getriebegehäuse 26 lösbar verbunden werden, so dass beim Anbringen des Deckels der Korrosionsschutzmittelbehälter Ziff. 1 in das Innere des Getriebegehäuses 25 ragt und so ein Korrosionsschutz für das Getriebe erreicht wird.

Soll das Getriebe 22 in Betrieb genommen werden, so wird der Deckel 26 von dem Getriebegehäuse entfernt, womit der Korrosionsschutzmittelbehälter 1 ebenfalls aus dem Inneren des Getriebegehäuses 25 entfernt wird. Der Korrosionsschutzmittelbehälter 1 kann dann von dem Deckel entfernt werden und der Deckel wieder an einem Getriebegehäuse angebracht, wie geschraubt, werden oder das Getriebegehäuse wird durch einen weiteren Deckel ohne den Korrosionsschutzmittelbehälter 1 verschlossen.

### Bezugszeichenliste

- 1: Korrosionsschutzmittelbehälter
- 2: erste Kammer
- 3: zweite Kammer
- 4: Zwischenwand
- 5: perforierte Wand
- 6: Seitenwand
- 7: Innenraum der ersten Kammer 2
- 8: Mittel
- 9: Gas
- 10: Umgebung
- 11: Seitenwand
- 12: Innenraum der zweiten Kammer 3
- 13: Öffnung
- 14: Mittel
- 15: perforierte Wand
- 16: erster Teilbehälter
- 17: zweiter Teilbehälter
- 18: Öffnung
- 21: Stirnseite
- 22: Getriebe
- 23: Antriebswelle
- 24: Abtriebswelle
- 25: Gehäuse
- 26: Deckel

## Patentansprüche

1. Anordnung mit einem Deckel (26) für ein Getriebe (22) und einem Korrosionsschutzmittelbehälter (1), wobei der Deckel (26) mit dem Korrosionsschutzmittelbehälter (1) verbunden ist; **dadurch gekennzeichnet, dass** der Korrosionsschutzmittelbehälter (1) in einem Innenraum des Getriebes (22) anordenbar ist, wobei der Korrosionsschutzmittelbehälter (1) zumindest eine erste und eine zweite Kammer (2, 3) und zumindest eine erste und eine zweite perforierte Wand (5, 15), aufweist, wobei die erste Wand (5) die erste Kammer (2) von dem Innenraum trennt, wobei die zweite Wand (15) die zweite Kammer (3) von dem Innenraum trennt, wobei in der zweiten Kammer (15) ein Mittel (14) angeordnet ist, welches Feuchtigkeit absorbiert, und wobei in der ersten Kammer (2, 3) ein Mittel (14) angeordnet ist, das Gase (9) zum Korrosionsschutz abgibt.

2. Anordnung nach Anspruch 1, **dadurch gekennzeichnet, dass** der Deckel (26) lösbar mit dem Getriebe (22), insbesondere einem Getriebegehäuse (25), verbunden ist.

3. Getriebe (22) mit einer Anordnung nach einem der vorhergehenden Ansprüche, **dadurch gekennzeichnet, dass**
der Deckel (26) einen Innenraum des Getriebes (22) verschließt; wobei der Korrosionsschutzmittelbehälter (1) in dem Innenraum angeordnet ist.

## Claims

1. Arrangement having a cover (26) for a transmission (22) and having a corrosion inhibitor container (1), wherein the cover (26) is connected to the corrosion inhibitor container (1); **characterized in that** the corrosion inhibitor container (1) is arrangeable in an interior space of the transmission (22), wherein the corrosion inhibitor container (1) has at least one first and one second chamber (2, 3) and at least one first and one second perforated wall (5, 15), wherein the first wall (5) separates the first chamber (2) from the interior space, wherein the second wall (15) separates the second chamber (3) from the interior space, wherein a medium (14) which absorbs moisture is arranged in the second chamber (3), and wherein a medium (14) which releases gases for corrosion inhibition is arranged in the first chamber (2).

2. Arrangement according to Claim 1, **characterized in that** the cover (26) is detachably connected to the transmission (22), in particular to a transmission housing (25).

3. Transmission (22) having an arrangement according to any of the preceding claims, **characterized in that**
the cover (26) closes off an interior space of the transmission (22); wherein the corrosion inhibitor container (1) is arranged in the interior space.

## Revendications

1. Agencement comprenant un couvercle (26) pour une boîte de vitesses (22) et un récipient d'agent anticorrosion (1), le couvercle (26) étant raccordé au récipient d'agent anticorrosion (1) ; **caractérisé en ce que** le récipient d'agent anticorrosion (1) peut être disposé dans un espace interne de la boîte de vitesses (22), le récipient d'agent anticorrosion (1) présentant au moins une première et une deuxième chambre (2, 3) et au moins une première et une deuxième paroi perforée (5, 15) , la première paroi (5) séparant la première chambre (2) de l'espace interne, la deuxième paroi (15) séparant la deuxième chambre (3) de l'espace interne, un moyen (14) étant disposé dans la deuxième chambre (3), lequel absorbe l'humidité, et un moyen (14) étant disposé dans la première chambre (2), lequel libère des gaz (9) pour la protection contre la corrosion.

2. Agencement selon la revendication 1, **caractérisé en ce que** le couvercle (26) est connecté de manière amovible à la boîte de vitesses (22), en particulier à un carter de boîte de vitesses (25).

3. Boîte de vitesses (22) comprenant un agencement selon l'une quelconque des revendications précédentes, **caractérisée en ce que** le couvercle (26) ferme un espace interne de la boîte de vitesses (22) ; le récipient d'agent anticorrosion (1) étant disposé dans l'espace interne.
